# EUROPEAN PATENT SPECIFICATION

(11) **EP 0 410 808 B1**
(45) Date of publication and mention of the grant of the patent: **30.11.1994**
(21) Application number: 90308300.4
(22) Date of filing: 27.07.1990
(51) Int. Cl.: A01D 17/06, B07B 1/15

(54) **A lifting conveyor, and an agricultural separator incorporating a lifting conveyor**
Eine Hebetransportvorrichtung und ein landwirtschaftliches Trennungsgerät, das eine Hebetransportvorrichtung umfasst
Un transporteur-élévateur et un séparateur agricole contenant un transporteur-élévateur

(30) Priority: 28.07.1989 GB 8917291; 28.07.1989 GB 8917292; 28.07.1989 GB 8917293
(43) Date of publication of application: 30.01.1991
(73) Proprietor: RICHARD PEARSON LIMITED, Boston, Lincolnshire PE22 0JZ (GB)
(72) Inventor: Needham, Timothy, c/o Richard Pearson Limited, Boston, Lincolnshire PE 22 0JZ (GB); Weston, David, c/o Richard Pearson Limited, Boston, Lincolnshire PE 22 0JZ (GB); Grimme, Franz, Jr., D-2845 Damme (DE)
(74) Representative: Devons, David Jon

(56) References cited:
- EP-A- 0 101 637
- FR-A- 1 048 299
- FR-A- 2 318 572
- GB-A- 878 492
- GB-A- 2 145 612
- GB-A- 2 219 949
- GB-A- 2 222 507
- US-A- 2 670 846
- US-A- 2 867 322

## Description

The present invention relates to a lifting conveyor, and an agricultural separator, e.g. a root crop or bulb harvester or a stone and clod separator, incorporating a lifting conveyor.

In known root-crop or bulb harvesters or stone and clod separators the lifting conveyor (or elevator) comprises an inclined open web having a plurality of spaced, transverse bars attached to longitudinally-extending belts. The conveyor is provided with at least one rotatable agitator for breaking up material on the web. The lifting conveyor is driven by primary and secondary drives, and web-supporting rollers are also provided. Material travelling up the web is agitated so that clods are broken up, and earth and small stones fall between the bars to be returned to the ground.

As a result of the many working parts, e.g. the agitators, primary and secondary drives, and web supporting rollers, such conveyors are not cheap, require considerable maintenance and take up considerable space. Furthermore, power is supplied to the upper, discharge end of the web, i.e. the power is required for the whole length of the web carrying the material to be separated. The power requirement is high and the wear and tear to the web is considerable. Furthermore, the capacity of the conveyor is limited.

A further disadvantage of known web lifting conveyors is that material falling through the upward run of the web falls onto the lower return run of the web. This not only causes increased wear, but, if the material does not pass through the lower return run, this can lead to a build-up of material at the upstream end of the web and can cause jamming.

FR-A-2 318 572 discloses a lifting conveyor for a root-crop harvester in which the conveyor comprises a plurality of rotatable members, each having a plurality of axially-spaced starwheels, each starwheel having a plurality of angularly-spaced flexible fingers for feeding material to the rotatable members. However, the radially extending fingers of adjacent rotatable members intermesh. Although this lifting conveyor copes reasonably well in dry, sandy soil, problems occur with wet, sticky soil and where there are wedge-shaped stones.

An object of the present invention is to provide a lifting conveyor, having an increased capacity and in which the chances of jamming are reduced if not eliminated altogether, even with wet, sticky soil conditions.

The invention provides a lifting conveyor as claimed in claim 1.

Although the lifting conveyor has an increased capacity it is cheaper to manufacture, has fewer working parts, takes up less space, requires less power and is subject to less wear.

The invention also provides an agricultural separator, such as a root crop or bulb harvester or grader, or a stone and clod separator, provided with a lifting conveyor as claimed in claim 1.

The invention will now be described with reference to the accompanying drawings, wherein:
Fig. 1 is a stone and clod separator shown diagrammatically in side view,
Fig. 2 is a side view of two of the rotatable members of Fig. 1,
Fig. 3 is a plan view of the rotatable members of Fig. 2, and
Fig. 4 is a view similar to part of Fig. 1 but with a modified starwheel portion of the lifting conveyor.

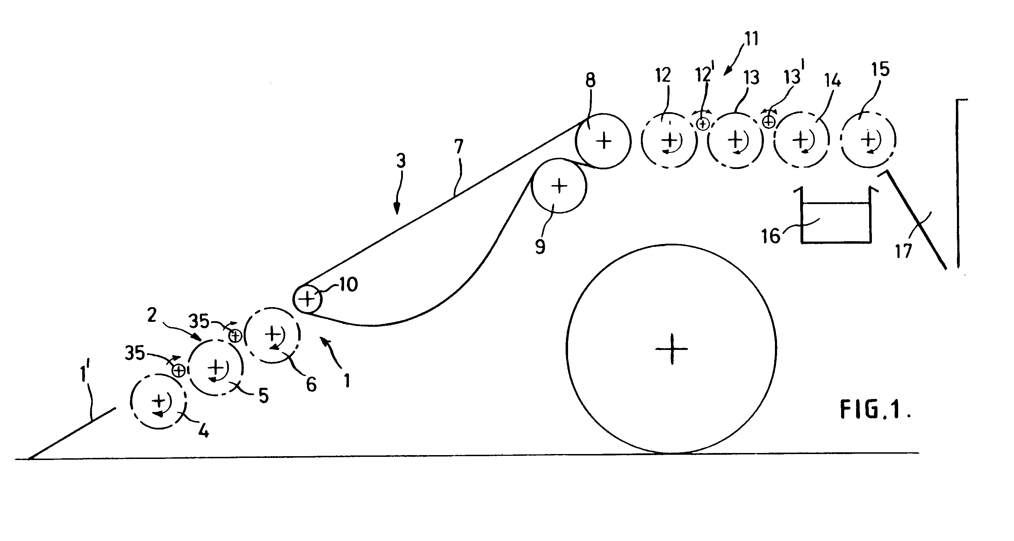

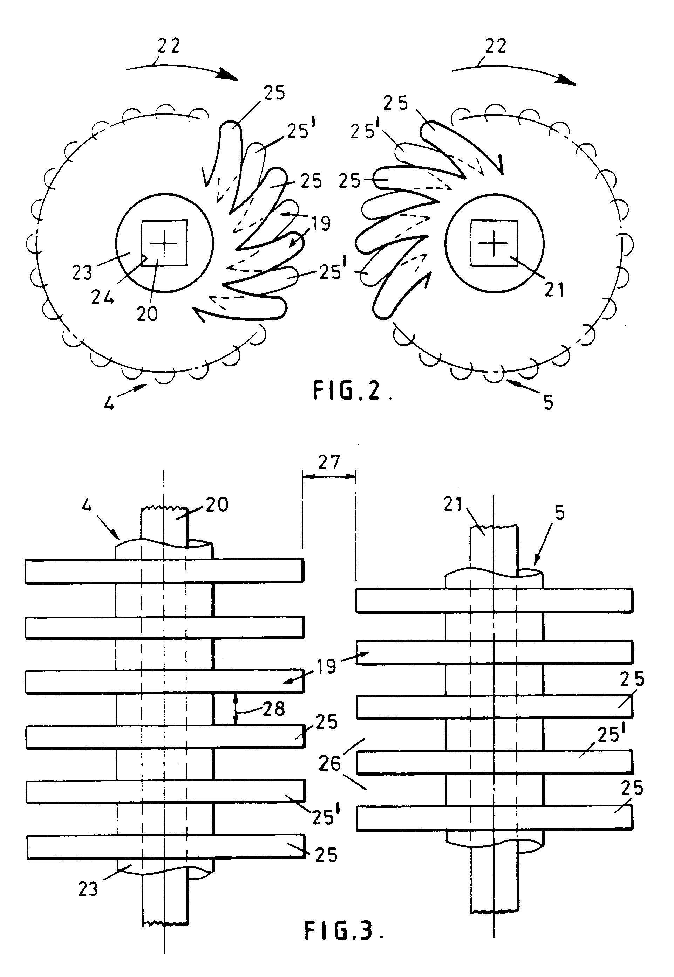

In Fig. 1, a stone and clod separator comprises a lifting conveyor 1 having a starwheel portion 2 and a web portion 3. The starwheel portion comprises three rotatable members 4, 5 and 6, only two of which are shown in Figs. 2 and 3.

In Figs. 2 and 3 the rotatable members 4, 5 each comprise a plurality of starwheels 19 mounted on parallel shafts 20, 21 drivingly rotatable in the same direction as shown by arrows 22. Each starwheel 19 has a central spacer bush 23 with a shaped axial bore 24 and a plurality of resilient angularly-spaced fingers 25 extending from the bush 23. The fingers are curved slightly in a rearward direction, i.e. their leading edges are convex and their trailing edges are concave. The fingers 25 are known as "parrot-beak" shaped.

From Fig. 2 it will be seen that the pitch of adjacent starwheels 19 on each shaft 20, 21 is slightly staggered, so that a finger 25' of a starwheel is aligned in an axial direction with the gap between the adjacent fingers 25 of the adjacent starwheel. Thus, the horizontal angularly-spaced gaps normally extending between the fingers of aligned starwheels are blocked by the fingers 25' of alternate starwheels. As a result of this arrangement, the fingers 25, 25' form helically-shaped rows around the axis. This ensures that, in use, slightly larger objects, which might fall into the gaps formed by aligned starwheels, are carried over.

The staggering of the pitch of the starwheels 19 is simply achieved by altering the pitch of the central bore 24. Thus, two sets of starwheels are formed in which the pitch of the bore 24 for each set differs by half the angular distance between adjacent fingers 25.

The bore 24 is preferably square shaped as shown, but could have any other suitable shape.

As can be seen from Fig. 3, the rotatable members 4, 5 are axially staggered so that the fingers 25, 25' of rotatable member 4 are aligned with the gaps 26 between the starwheels of the other rotatable member 5.

In use, the material flowing over the rotatable members is rotated in the gap 27 therebetween both against the flow of material (i.e. anticlockwise) and also from side to side by the action of the fingers 25 of the starwheels 19. This facilitates the break up of clods and separation of soil from root-crop, and allows small objects to fall through the gap 27. The starwheels of the rotatable members 4, 5 and 6 preferably have 12 fingers, although they could have fewer, e.g. 6, or more, e.g. 16, 18 etc. The starwheels of each rotatable member are preferably staggered with respect to the starwheels of the adjacent rotatable member or members, so that the fingers of the starwheels of any one rotatable member are aligned with the axial spacing between starwheels of the adjacent rotatable member or members.

The spacing between the rotatable members 4, 5 and 6 is preferably adjustable, and may be set to allow small particles, e.g. hazel-nut size, to be returned to the ground.

The web portion 3 is a conventional web conveyor, and comprises a web 7, primary and secondary drives 8, 9, and a support roller 10 (see for example GB 2 145 612B).

The web portion 3 may be omitted completely, and may be replaced by further rotatable members similar to rotatable members 4, 5 and 6. The resulting lifting conveyor would be much shorter than the comparable web conveyor, so that the harvester or stone or clod separator would be shorter. Furthermore, the starwheels of the rotatable members are easily replaceable if broken or worn.

The rotatable members 4, 5 and 6 may be driven by any suitable means. For example, the rotatable members may each be provided with double sprockets. The rotatable member 4 could be driven by a motor via chains. Drive could be taken from the rotatable member 4 to the rotatable member 5 via further chains, and similarly to the rotatable member 6 and to any further rotatable members.

Material raised by the share 1' is fed directly to the rotatable member 4. In view of the highly efficient separation of the starwheels, considerably less material reaches the web portion 3. Thus, the total material on the lifting conveyor 1 is considerably less than the total material on the equivalent conventional web lifting conveyor. As a result, the power requirements for driving a lifting conveyor formed from such rotatable members are about 50% of the requirements for a conventional web conveyor. Also the material falling through onto the return run is less, thereby reducing the risk of jamming at the roller 10.

In Fig. 1 a stone and clod separator device 11 is arranged downstream of the lifting conveyor 1, and comprises three rotatable members 13, 14 and 15 provided with reversible steel rollers 13', which are also removable. A transverse conveyor 16 is arranged below the rotatable members 14 and 15, and a collecting trough 17 is arranged downstream of the rotatable member 15. The arrangement of these rotatable members is very similar to that shown in Figs. 2 and 3 and is described more fully in our copending application No. 9038299.8 (EP-A-0410807) entitled "Agricultural Separator" and filed on the same day.

These rotatable members 13, 14, 15 each also comprise a row of axially-spaced starwheels 19 having angularly-spaced resilient fingers 25, 25', wherein there is a permanent circumferential spacing between the rotatable members so that they do not intermesh and wherein the radial spacing 27 between the first and second rotatable members 13, 14 and the spacing between the starwheels thereof is sufficiently small to allow the small size particles to pass therethrough for return to the ground, and the spacing between the second and third rotatable members 14, 15 and/or the spacing between the starwheels of the third rotatable member 15 is sufficiently large to separate the intermediate size objects downwardly therebetween for removal laterally of the separator.

A transverse conveyor 16 can be arranged beneath the spacing between the second and third rotatable members 14, 15 of the further conveyor 11 for removal of the objects falling therethrough.

The starwheels of the first rotatable member 13 of the further conveyor each preferably have twelve resilient fingers.

The starwheels of the second and third rotatable members 14, 15 each preferably have six resilient fingers.

If the agricultural separator is used as a stone and clod separator the spacing between the starwheels on the second rotatable member 14 is from 4 to 8cm, preferably 4.5cm.

The spacing of the starwheels on the third rotatable member 15 is from 8 to 16cm, preferably 9cm.

Further rotatable members 12 can be provided upstream and/or downstream of the three rotatable members 13-15, comprising rows of axially-spaced starwheels 19 having angularly-spaced resilient fingers 25, 25'.

The starwheels 19 are preferably replaceable by spacers for varying the spacing of the starwheels 19 on the rotatable members 13-15.

The distance between the rotatable members 12 to 15 is preferably adjustable to vary the size of material falling therebetween.

At least the first rotatable member 12 or 13 can be provided with a reversible roller 12', 13' for facilitating or hindering the crushing of material being conveyed.

The reversible roller 12', 13' is preferably removable.

Thus, a complete de-stoning machine may be provided in which the lifting and horizontal conveyors for the clods and stones are formed from starwheel-carrying rotatable members.

The starwheel lifting conveyor 2 described above may of course be incorporated in any other suitable agricultural separator e.g. a root-crop or bulb harvester, or a root-crop or bulb grader.

If the lifting conveyor is being used for lifting produce having easily damaged skins, e.g. new potatoes, then smooth-surface rollers 35, e.g. of steel, rubber or plastics material, are provided immediately downstream of the rotatable members 4, 5 (Fig. 1) or of the rotatable member 31 (Fig. 4). The rollers 35 would be driven in the same direction as the rotatable members. Thus, the potatoes carried over by one rotatable member, say 4 in Fig. 1, would pass over the immediately downstream roller 35 and then over the immediately downstream rotatable member 5, thereby minimising scrubbing action of the starwheel fingers on the skin.

Rollers 35 are also effective in preventing wedge-shaped objects from being caught in the gaps between the rotatable members 4 and 5 and may be provided for this purpose. Furthermore, the rollers 35 may be provided to alter the spacing between the rotatable members 4, 5 and 6, as described previously, particularly if the rollers 35 are adjustable, e.g. slidable in a respective slot in opposite side walls to vary the gap between the roller 35 and the respective, immediately-downstream rotatable members 5, 6. The rollers 35 could be adjusted differently in the same lifting conveyor to provide different, e.g. increasing, spacing between the rotatable members in the direction of rotation thereof.

## Claims

1. A lifting conveyor for an agricultural separator, wherein the conveyor comprises a plurality of rotatable members (4, 5, 6) each having a plurality of axially-spaced starwheels (19) each having a plurality of angularly-spaced flexible fingers (25), means (1') for feeding material to the rotatable members (4, 5, 6), the rotatable members (4, 5, 6) being arranged to provide an inclined conveyor surface extending upwardly from the feeding means (1'), and means for rotating the rotatable members (4, 5, 6) to lift material thereon, characterised in that there is a permanent circumferential spacing between the tips of the flexible fingers (25) of the starwheels (19) of adjacent rotatable members (4, 5, 6) such that in use particles of soil and small stones fall through the spacing (27) to be returned to the ground.

2. A lifting conveyor as claimed in claim 1, wherein the starwheels (19) of the rotatable members (4, 5, 6) are staggered with respect to the starwheels of adjacent rotatable members so that the starwheels of a rotatable member (4) are aligned with the axial gaps between the starwheels of the adjacent rotatable member (5) or members.

3. A lifting conveyor as claimed in any one of the preceding claims, wherein the starwheels (19) each have twelve flexible fingers (25, 25').

4. A lifting conveyor as claimed in any one of the preceding claims, wherein a roller (35) is arranged between adjacent rotatable members to minimise damage to material being conveyed.

5. An agricultural separator, characterised in that it has a lifting conveyor (1) as claimed in any one of the preceding claims.

6. An agricultural separator as claimed in claim 5 for separating material into small size particles and intermediate and large size objects respectively, further having a substantially horizontal conveyor (11) arranged downstream of the lifting conveyor and comprising three spaced rotatable members (13, 14, 15) each comprising a row of axially-spaced starwheels (19) having angularly-spaced resilient fingers (25, 25'), wherein there is a permanent circumferential spacing between the rotatable members (13, 14, 15) so that they do not intermesh and wherein the radial spacing (27) between the first and second rotatable members (13, 14) and the spacing between the starwheels thereof is sufficiently small to allow the small size particles to pass therethrough for return to the ground, and the spacing between the second and third rotatable members (14, 15) and/or the spacing between the starwheels of the third rotatable member (15) is sufficiently large to separate the intermediate size objects downwardly therebetween for removal laterally of the separator.

7. An agricultural separator as claimed in claim 6, wherein a transverse conveyor (16) is arranged beneath the spacing between the second and third rotatable members (14, 15) of the further conveyor (11) for removal of the objects falling therethrough.

8. An agricultural separator as claimed in claim 6 or 7, wherein the starwheels of the first rotatable member (13) of the further conveyor each have twelve resilient fingers.

9. An agricultural separator as claimed in any one of claims 6 to 8, wherein the starwheels of the second and third rotatable members (14, 15) each have six resilient fingers.

10. An agricultural separator as claimed in claims 6 to 9, wherein when used as a stone and clod separator the spacing between the starwheels on the second rotatable member (14) is from 4 to 8cm, preferably 4.5cm.

11. An agricultural separator as claimed in claim 10, wherein the spacing of the starwheels on the third rotatable member (15) is from 8 to 16cm, preferably 9cm.

12. An agricultural separator as claimed in any one of claims 6 to 11, wherein further rotatable members (12) are provided upstream and/or downstream of the three rotatable members (13-15), and comprise rows of axially-spaced starwheels (19) having angularly-spaced resilient fingers (25, 25').

13. An agricultural separator as claimed in claims 6 to 12, wherein the starwheels are replaceable by spacers for varying the spacing of the starwheels on the rotatable members (13-15).

14. An agricultural separator as claimed in claims 5 to 12, wherein the distance between the rotatable members (4, 5, 6, 12-15) is adjustable to vary the size of material falling therebetween.

15. An agricultural separator as claimed in claims 12 to 14, wherein at least the first rotatable member (13) is provided with a reversible roller (13') for facilitating or hindering the crushing of material being conveyed.

16. An agricultural separator as claimed in claim 15, wherein the reversible roller (13') is removable.

## Patentansprüche

1. Hebeförderer für ein landwirtschaftliches Trenngerät, mit einer Vielzahl von drehbaren Elementen (4, 5, 6), von denen jedes eine Vielzahl von mit axialem Zwischenraum angeordneten Sternrädern (19) aufweist, von denen jedes eine Vielzahl von mit Winkelzwischenraum angeordneten, flexiblen Fingern (25) aufweist, einem Mittel (1') zum Zuführen von Material zu den drehbaren Elementen (4, 5, 6), wobei die drehbaren Elemente (4, 5, 6) so angeordnet sind, daß sie eine geneigte Fördereroberfläche bilden, die sich von dem Zuführmittel (1') nach oben erstreckt, und einem Mittel zum Drehen der drehbaren Elemente (4, 5, 6), um das darauf befindliche Material zu heben, dadurch gekennzeichnet, daß ein dauernder Umfangs-Zwischenraum zwischen den Spitzen der flexiblen Finger (25) der Sternräder (19) der aneinandergrenzenden, drehbaren Elemente (4, 5, 6) vorhanden ist, so daß bei der Verwendung Erdpartikel und kleine Steine durch den Zwischenraum (27) hindurch auf den Erdboden zurückfallen.

2. Hebeförderer gemäß Anspruch 1, bei dem die Sternräder (19) der drehbaren Elemente (4, 5, 6) versetzt angeordnet sind bezüglich der Sternräder der angrenzenden drehbaren Elemente, so daß die Sternräder eines drehbaren Elements (4) entsprechend den axialen Lücken zwischen den Sternrädern des angrenzenden drehbaren Elements (5) oder der angrenzenden drehbaren Elemente ausgerichtet sind.

3. Hebeförderer gemäß irgendeinem der vorhergehenden Ansprüche, bei dem die Sternräder (19) jeweils zwölf flexible Finger (25, 25') haben.

4. Hebeförderer gemäß irgendeinem der vorhergehenden Ansprüche, bei dem eine Rolle (35) zwischen aneinandergrenzenden drehbaren Elementen angeordnet ist, um die Beschädigung des geförderten Materials möglichst gering zu halten.

5. Landwirtschaftliches Trenngerät, dadurch gekennzeichnet, daß es einen Hebeförderer (1) gemäß irgendeinem der vorhergehenden Ansprüche aufweist.

6. Landwirtschaftliches Trenngerät gemaß Anspruch 5, zum Trennen von Material in Partikel von kleiner Größe, und in Objekte von mittlerer und großer Größe, das außerdem einen im wesentlichen horizontalen Förderer (11) hat, der stromabwärts von dem Hebeförderer angeordnet ist und drei mit Zwischenraum angeordnete, drehbare Elemente (13, 14, 15) aufweist, von denen jedes eine Reihe von mit axialem Zwischenraum angeordneten Sternrädern (19) aufweist, die mit Winkelzwischenraum angeordnete, elastische Finger (25, 25') aufweisen, wobei ein dauernder Umfangs-Zwischenraum zwischen den drehbaren Elementen (13, 14, 15) vorhanden ist, so daß sie nicht ineinandergreifen, und wobei der radiale Zwischenraum (27) zwischen dem ersten und zweiten drehbaren Element (13, 14), und der Zwischenraum zwischen ihren Sternrädern klein genug ist, um nur die Partikel von kleiner Größe hindurchfallen zu lassen, damit sie wieder auf den Erdboden zurückfallen, und der Zwischenraum zwischen dem zweiten und dritten drehbaren Element (14, 15), und/oder der Zwischenraum zwischen den Sternrädern des dritten drehbaren Elements (15) groß genug ist, um die Objekte von mittlerer Größe dazwischen nach unten fallen zu lassen, damit sie aus dem Trenngerät seitlich herausgenommen werden können.

7. Landwirtschaftliches Trenngerät gemäß Anspruch 6, bei dem ein Querförderer (16) unterhalb des Zwischenraums zwischen dem zweiten und dritten drehbaren Element (14, 15) des weiteren Förderers (11) angeordnet ist, um die hindurchfallenden Objekte abzutransportieren.

8. Landwirtschaftliches Trenngerät gemäß Anspruch 6 oder 7, bei dem die Sternräder des ersten drehbaren Elements (13) des weiteren Förderers jeweils zwölf elastische Finger haben.

9. Landwirtschaftliches Trenngerät gemäß irgendeinem der Ansprüche 6 bis 8, bei dem die Sternräder des zweiten und dritten drehbaren Elements (14, 15) jeweils sechs elastische Finger haben.

10. Landwirtschaftliches Trenngerät gemäß Anspruch 6 bis 9, bei dem im Falle der Verwendung als Stein- und Klumpentrenner der Zwischenraum zwischen den Sternrädern bei dem zweiten drehbaren Element (14) 4 bis 8 cm, vorzugsweise 4,5 cm beträgt.

11. Landwirtschaftliches Trenngerät gemaß Anspruch 10, bei dem der Zwischenraum zwischen den Sternrädern bei dem dritten drehbaren Element (15) 8 bis 16 cm, vorzugsweise 9 cm beträgt.

12. Landwirtschaftliches Trenngerät gemäß irgendeinem der Ansprüche 6 bis 11, bei dem weitere drehbare Elemente (12) stromaufwärts und/oder stromabwärts von den drei drehbaren Elementen (13-15) vorgesehen sind, und Reihen von mit axialem Zwischenraum angeordneten Sternrädern (19) aufweisen, die mit Winkel-Zwischenraum angeordnete elastische Finger (25, 25') haben.

13. Landwirtschaftliches Trenngerät gemäß Anspruch 6 bis 12, bei dem die Sternräder durch Abstandsstücke ersetzbar sind, um den Zwischenraum der Sternräder bei den drehbaren Elementen (13-15) zu verändern.

14. Landwirtschaftliches Trenngerät gemäß Anspruch 5 bis 12, bei dem der Abstand zwischen den drehbaren Elementen (4, 5, 6, 12-15) einstellbar ist, um die Größe des dazwischen hindurchfallenden Materials zu verändern.

15. Landwirtschaftliches Trenngerät gemäß Anspruch 12 bis 14, bei dem mindestens das erste drehbare Element (13) mit einer umkehrbaren Rolle (13') versehen ist, um das Zerquetschen des geförderten Materials zu erleichtern oder zu verhindern.

16. Landwirtschaftliches Trenngerät gemäß Anspruch 15, bei dem die umkehrbare Rolle (13') abnehmbar ist.

## Revendications

1. Un transporteur-élévateur pour un séparateur agricole, dans lequel le transporteur comprend plusieurs éléments rotatifs (4, 5, 6) dont chacun possède plusieurs roues en étoile espacées axialement (19), comportant chacun plusieurs doigts flexibles espacés angulairement (35), un moyen (1') pour amener du matériau aux éléments rotatifs (4, 5, 6), les éléments rotatifs (4, 5, 6) étant agencés de sorte à fournir une surface de transport inclinée s'étendant vers le haut à partir du moyen chargeur (1'), et un moyen pour faire tourner les éléments rotatifs (4, 5, 6) pour y soulever du matériau, caractérisé en ce qu'il existe un espacement circonférentiel permanent entre les pointes des doigts flexibles (25) des roues en étoile (19) des éléments rotatifs adjacents (4, 5, 6), de sorte qu'en service des particules de terre et de petites pierres retombent à travers l'espacement (27) et retournent au sol.

2. Un transporteur-élévateur selon la revendication 1, dans lequel les roues en étoile (19) des éléments rotatifs (4, 5, 6) sont décalées par rapport aux roues en étoile des éléments rotatifs adjacents, de sorte que les roues en étoile d'un élément rotatif (4) sont alignées avec les espaces axiaux entre les roues en étoile de l'élément rotatif adjacent (5) ou des éléments rotatifs adjacents.

3. Un transporteur-élévateur selon l'une quelconque des revendications précédentes, dans lequel les roues en étoile (19) comportent chacun douze doigts flexibles (25, 25').

4. Un transporteur-élévateur selon l'une quelconque des revendications précédentes, dans lequel un rouleau (35) est agencé entre les éléments rotatifs adjacents pour minimiser les dégâts causés au matériau transporté.

5. Un séparateur agricole caractérisé en ce qu'il possède un transporteur-élévateur (1) selon l'une quelconque des revendications précédentes.

6. Un séparateur agricole selon la revendication 5 servant respectivement à séparer du matériau en particules de petite taille ainsi que des objets de taille intermédiaire et grande, comportant un transporteur supplémentaire pratiquement horizontal (11) agencé en aval du transporteur-élévateur et comprenant trois éléments rotatifs espacés (13, 14, 15), comportant chacun une rangée de roues en étoile espacées axialement (19) avec des doigts élastiques espacés angulairement (25, 25'), un espacement circonférentiel permanent existant entre les éléments rotatifs (13, 14, 15), de sorte qu'ils ne s'engrènent pas, l'espacement radial (27) entre les premier et deuxième éléments rotatifs (13, 14) et l'espacement entre les roues en étoile correspondantes étant suffisamment petit pour permettre le passage de particules de petite taille en vue de leur retour au sol, l'espacement entre les deuxième et troisième éléments rotatifs (14, 15) et/ou l'espacement entre les roues en étoile du troisième élément rotatif (15) étant suffisamment grands pour séparer les objets de taille intermédiaire et les faire passer vers le bas entre eux pour les éliminer latéralement du séparateur.

7. Un séparateur agricole selon la revendication 6, dans lequel un transporteur transversal (16) est agencé au-dessous de l'espacement entre les deuxième et troisième éléments rotatifs (14, 15) du transporteur supplémentaire (11) en vue de l'élimination des objets retombant à travers celui-ci.

8. Un séparateur agricole selon les revendications 6 ou 7, dans lequel les roues en étoile du premier élément rotatif (13) du transporteur supplémentaire possèdent chacun douze doigts élastiques.

9. Un séparateur agricole selon l'une quelconque des revendications 6 à 8, dans lequel les roues en étoile des deuxième et troisième éléments rotatifs (14, 15) possèdent chacun six doigts élastiques.

10. Un séparateur agricole selon les revendications 6 à 9, dans lequel, en cas de son utilisation comme séparateur de pierres et de mottes de terre, l'espacement entre les roues en étoile sur le deuxième élément rotatif (14) est compris entre 4 et 8 cm et correspond de préférence à 4,5 cm.

11. Un séparateur agricole selon la revendication 10, dans lequel l'espacement des roues en étoile sur le troisième élément rotatif (15) est compris entre 8 et 16 cm et correspond de préférence à 9 cm.

12. Un séparateur agricole selon l'une quelconque des revendications 6 à 11, dans lequel des éléments rotatifs supplémentaires (12) sont agencés en amont et/ou en aval des trois éléments rotatifs (13-15) et comportent des rangées de roues en étoile espacées axialement (19) avec des doigts élastiques espacés angulairement (25, 25').

13. Un séparateur agricole selon les revendications 6 à 12, dans lequel les roues en étoile peuvent être remplacées par des pièces d'écartement pour faire varier l'espacement des roues en étoile sur les éléments rotatifs (13-15).

14. Un séparateur agricole selon les revendications 5 à 12, dans lequel la distance entre les éléments rotatifs (4, 5, 6, 12-15) peut être ajustée pour faire varier la taille du matériau retombant entre eux.

15. Un séparateur agricole selon les revendications 12 à 14, dans lequel au moins le premier élément rotatif (13) comporte un rouleau réversible (13') pour faciliter ou gêner le broyage du matériau transporté.

16. Un séparateur agricole selon la revendication 15, dans lequel le rouleau réversible (13') est amovible.
